# EUROPEAN PATENT APPLICATION

(11) **EP 1 976 224 A1**
(43) Date of publication of application: **01.10.2008**
(21) Application number: 08151988.6
(22) Date of filing: 27.02.2008
(51) Int. Cl.: H04L 29/06

(54) **Routing support in heterogeneous communication networks**

(30) Priority: 29.03.2007 US 730051
(71) Applicant: Nokia Corporation, 02150 Espoo (FI)
(72) Inventor: Ye, Ying, Mountain View,, CA 94040 (US); Sahasrabudhe, Meghana, Sunnyvale,, CA 94087 (US); Westphal, Cedric, San Francisco,, CA 94117 (US); Tang, Kevin, Dublin,, CA 94568 (US); Vora, Naheed, Santa Clara,, CA 95054 (US)
(74) Representative: TBK-Patent

(57) **Abstract**

A device, e.g., a mobile node (10), comprises a first binding unit which provides for a binding to a first tunnelling server, e.g., home agent (30), using a first protocol, e.g., IP-in-IP tunnelling, a second binding unit which provides for a binding to a second tunnelling server (40) using a second protocol different from the first protocol, e.g., IPv6-in-UDP-in-IPv4, and an authorizing unit which causes the first or second binding unit to provide the binding. This may enable the mobile node to communicate with a correspondent node (20) using Mobile IP Route Optimization, e.g., when the mobile node is connected to an IPv4-only network and the correspondent node to an IPv6-only network.

## Description

### FIELD OF THE INVENTION

The present invention relates to routing support in heterogeneous communications networks, such as mobile IPv6 support in IPv4/IPv6 heterogeneous networks, and route optimisation in heterogeneous networks.

### BACKGROUND OF THE INVENTION

Tunnelling is a mechanism to enable inter-operability between different communication network environments, for example IPv4 (Internet Protocol version 4) and IPv6 (Internet Protocol version 6) networks. IPv6 is designed to be a replacement for IPv4. Due to the existing IPv4 deployment, there is a lengthy transition period during which IPv4 and IPv6 will co-exist.

In tunnelling architectures according to the prior art, a mobile node (MN) only uses one tunnelling server at any time. The tunnelling server provides a tunnel that shuttles packets towards the mobile node. If the node is mobile then mobile IP must be used, otherwise any tunnelling method may be employed. The tunnel starts at a home agent (HA), and ends at the mobile node's care-of address. With the introduction of dual stack mobile IP, reverse tunnelling is used, in which a tunnel starts at the mobile node's care-of address and terminates at the home agent (HA). Thus, all mobile IP traffic travels through the home agent, and the HA can become overloaded.

There are route optimisation (RO) methods for Mobile IPv6 in which both MN and CN (Correspondent Node) are in an IPv6 cloud. In case the MN is in an IPv4 cloud, where it does not know an alternative route to the CN, RO cannot be used.

### SUMMARY OF THE INVENTION

The present invention proposes a mechanism with which, in a heterogeneous network, traffic can be diversified from a tunnelling server, and traffic can be balanced between available tunnelling servers.

According to an embodiment of the invention, an improvement over DSMIPv6 (Dual Stack Mobile IPv6 support) is provided together with full features of DSMIPv6.

According to the embodiment, traffic overloading at a Home Agent (HA) is avoided by distributing mobile IP traffic to the HA or Tunnelling Servers, and route optimisation is provided, enabling the mobile node (MN) to potentially consume fewer resources in the Home Agent.

The invention enables a mobile node supporting services of a first communication network environment different from a second communication network environment to use mobility services more efficiently when the mobile node moves to the second communication network environment.

According to an embodiment of the invention, the MN with DSMIPv6 is enabled to use mobility services more efficiently when the MN moves to IPv4 networks.

### BRIEF DESCRIPTION OF THE DRAWINGS

Fig. 1 shows a schematic diagram illustrating a connection broker based architecture.
Fig. 2 shows a schematic diagram illustrating an architecture to support mobile IP traffic diversity in a heterogeneous network according to an embodiment of the invention.
Fig. 3 shows a schematic diagram illustrating a reachability testing in the architecture shown in Fig. 2 according to an embodiment of the invention.
Fig. 4 shows a schematic block diagram illustrating a structure of a device according to an embodiment of the invention.

### DESCRIPTION OF THE PREFERRED EMBODIMENTS

In order to diversify traffic from a tunnelling server actually used by a mobile node (MN), a tunnelling broker inside a connection broker may be used to store information about further tunnelling servers available for the MN and the actually used tunnelling server. Information pertaining to tunnelling servers may also be pre-configured in the MN.

The actually used tunnelling server has interfaces to different communication network environments, i.e. a first communication network environment providing certain services to the mobile node, and a second communication network environment in which the mobile node is roaming currently. Further available tunnelling servers also have interfaces to the different communication network environments. For accessing the actually used tunnelling server the mobile node may use a protocol different from a protocol for accessing the further available tunnelling servers.

According to an embodiment of the invention, the actually used tunnelling server is a DSMIPv6 home agent (HA). DSMIPV6 enables a mobile node with mobile IPv6 stack to be able to use mobile IPv6 service when it roams into IPv4 network.

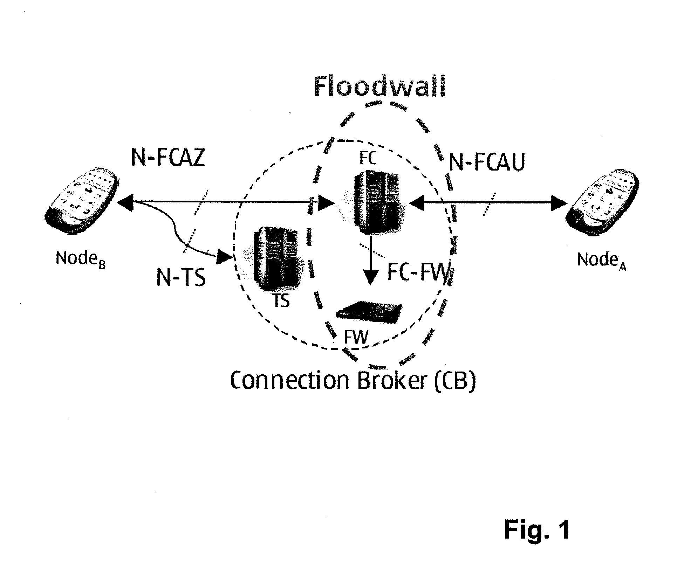

According to the present invention, since multiple tunnelling servers are needed, a connection broker (CB) based architecture is introduced as shown in Fig. 1, where the CB is aware of the existences of tunnelling servers. A tunnelling Setup Protocol (TSP) may be implemented between the tunnelling broker which may be one of the modules inside a distinct CB and the mobile node (Node). In TSP, the Node sends a message SelectTunnel (not shown) to the tunnelling broker to request information about tunnelling servers. The tunnelling broker responds to the Node with the parameters of the available tunnels to be used via a message AvailableTunnelParams (not shown), which may include DSMIPv6 related information. The information provided by the tunnelling broker at least contains addresses of the tunnelling servers according to the addressing schemes of the different communication network environments. After having acquired this information, the MN (Node) selects desired tunnelling servers to communicate with a correspondent node (i.e. destination) and obtains the addresses.

The above description relating to a connection broker (CB) based architecture is presented as an illustrative example. It is clear to persons skilled in the art that the parameters of any tunnelling servers may be received in other ways as well, and the present invention is not in any way restricted to using a connection broker, although one may be used in certain embodiments to distribute tunnelling server parameters.

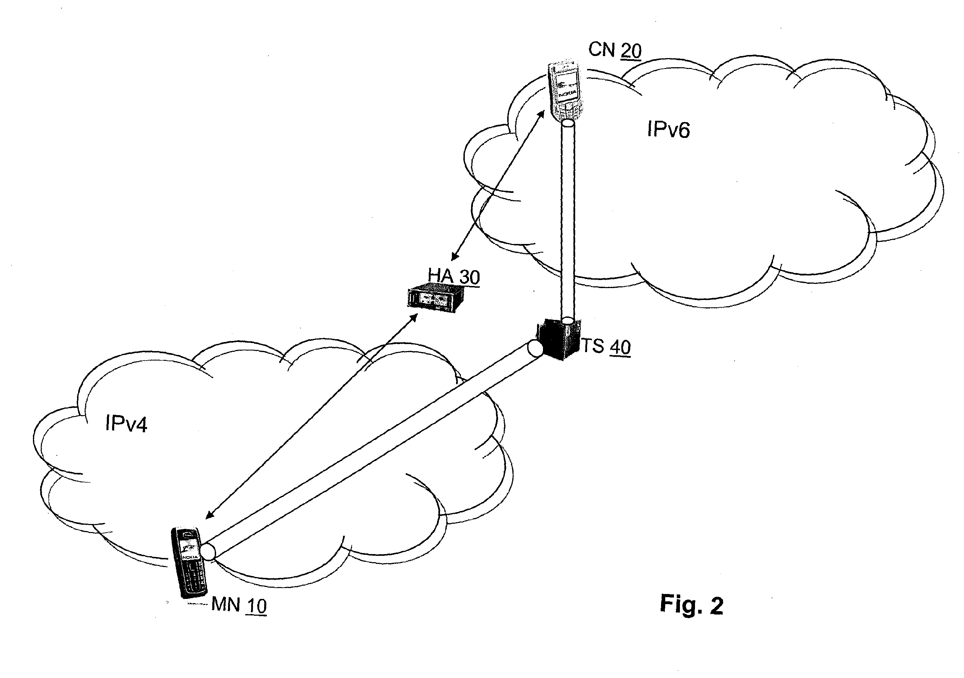

Fig. 2 shows a schematic diagram illustrating an architecture to support mobile IP traffic diversity in a heterogeneous network according to an embodiment of the invention. In the example shown in Fig. 2, the different communication network environments are illustrated by an IPv4 cloud and an IPv6 cloud, respectively. A mobile node 10 is present in the IPv4 cloud and wants to communicate with a correspondent node CN 20 which is present in the IPv6 cloud. The MN 10 has a binding with a home agent HA 30 and is also configured to connect to a tunnelling server TS 40, information relating to which it may have received or been configured with.

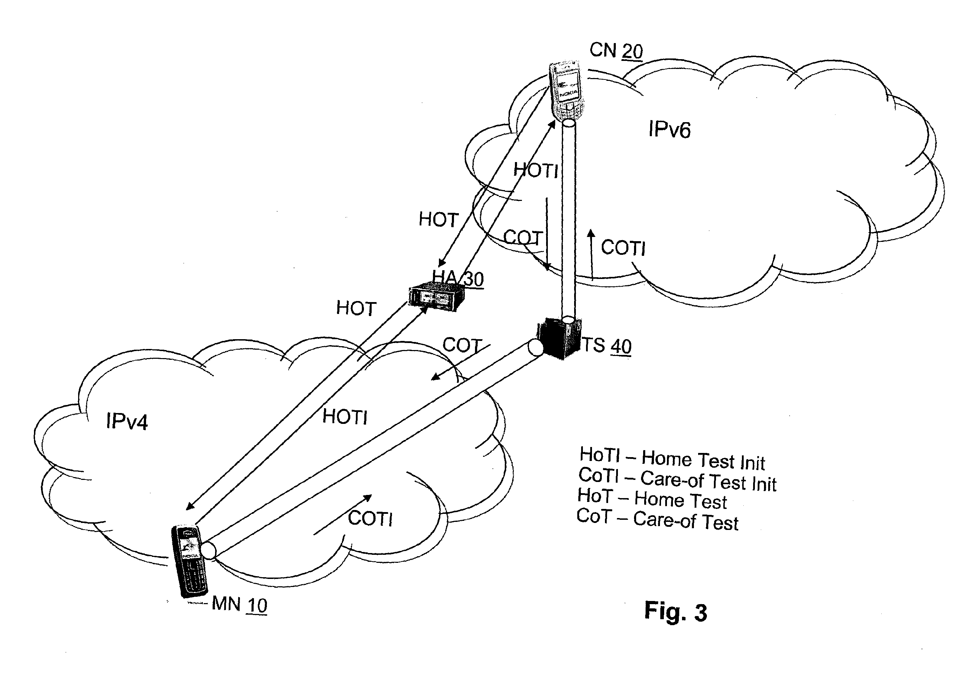

According to an embodiment of the invention, the MN 10 supports both DSMIPv6 stack and at least one of tunnelling protocols such as, for example, 6to4, Teredo, Anything in Anything or SSH (Secure Shell). As will be described in the following by referring to Fig. 3, the MN 10 uses route optimisation to diversify traffic. For this purpose, in addition to updating the binding to the HA 30, the MN 10 also needs to register its current binding with the CN 10 through the tunnelling server 40.

Before sending a Binding Update, a Return Routability procedure may be performed to authorize Binding Update messages. Two tests are performed as part of this procedure, i.e., Home and Care-of Test Init messages are sent from the MN 10 towards the CN 20 at the same time. It is assumed that when the tunnelling server 40 or Home Agent 30 is congested, the corresponding packet delay will increase. Therefore, the following mechanism is proposed.

As shown in Fig. 3, the Home test Init (HOTI) message is sent from the MN 10 towards the CN 20 through the home agent 30, and the Care-of Test init (COTI) is sent from the MN 10 towards the CN 20 through the selected tunnelling server 40.

The messages HOTI and COTI reach the CN 20, and the CN 20 responds with reply messages HOT and COT to the MN 10 along different routes as shown in Fig. 3.

The MN 10 detects if the reply messages arrive at disparate times. Usually, if the difference between the round trip delays (i.e. HOTI+HOT and COTI+COT) for the alternative route via the TS 40 and reverse tunnelling via the HA 30 is neglectable, the MN 10 can select any of these tunnelling servers (i.e. HA 30 or TS 40) with corresponding tunnelling protocols.

Otherwise, the route with less delay will be used. In this context, it is assumed that once traffic congestion occurs, the relevant tunnelling server (either alternative tunnelling server TS 40 or HA 30) will add additional delay to a new requested tunnel. If the responding time of the Care-of Test init response message is shorter than the responding time of Home Test Init response message, the alternative route via the TS 40 will be used for MIP traffic; otherwise, the reverse tunnelling is adopted.

A tunnelling broker may be a single device or integrated with a tunnelling server. The information about the tunnelling server actually used by the mobile node, such as a DSMIPV6 HA, may be pre-configured at a tunnelling broker. Alternatively, the HA may host a service to expose its configuration to a tunnelling broker, and the tunnelling broker may perform a service discovery to acquire this information.

Communications between a tunnelling broker and the MN may use the TSP (Tunnelling Selection Protocol). According to an embodiment of the invention, information is provided by a tunnelling broker and it comprises an IPv4 address and an IPv6 address of the available tunnelling servers including the HA. After having acquired this information, the MN is able to select the desired tunnelling servers to communicate with the correspondent node (i.e., the destination) and obtain the IP addresses.

If the routability procedure as described above is used, the mobile node 10 may encounter an addressing problem as follows. The alternative tunnelling server 40 and the HA 30 as shown in Fig. 3 assign different IPv6 addresses to the mobile node 10. Otherwise, the response messages HOT and COT would pass through the same route. For example, if the MN 10 uses an IPv6 address assigned by the home agent 30 as source address also in packets sent towards the CN 20 through the TS 40, the packets from the CN 20 to the MN 10 will be intercepted by the home agent 30, and the proposed mechanism does not work anymore. Therefore, the above-described extended route optimisation requires the mobile node 10 to have capability to handle two connections with different IP addresses.

A packet format for a tunnelling protocol used between the MN 10 and the TS 40 may be similar to a packet format an HA based reverse tunnelling. The packet format for the tunnelling protocol may be as follows:

| | | | |
|---|---|---|---|
| IPv4 header | UDP header | IPv6 header | IPv6 payload |

The IPv4 header contains an IPv4 address of the MN 10 as source address, and an IPv4 address of the TS 40 as destination address. The IPv6 header contains a source IPv6 address of the MN 10 which is assigned by the TS 40 and an IPv6 address of the destination, i.e. the CN 20.

According to the proposed extended route optimisation approach, at the initial stage, two separated tunnels have to be established. However, one of the tunnels can be released (e.g. through time-out) once the MN decides which route it wants to take.

To avoid this overhead in certain cases, since a connection broker, if used, may roughly know the status of the tunnelling servers from handling the TSP requests, when a connection broker, if used, provides the information on the tunnelling servers to the MN e.g. for home agent information, it can decide whether the extended optimisation is supported for the MN. If the extended optimisation is not supported for the MN, reverse tunnelling is enforced. Otherwise, a connection broker may indicate the use of extended optimisation in HA settings.

In case communication is possible between a tunnelling broker and the HA, whenever HA is overloaded, it will signal the tunnelling broker to cause the tunnelling broker to suggest to use extended route optimisation to diversify the traffic.

According to an embodiment of the invention, applications in the MN have to support DSMIPV6 stack for reverse tunnelling through the HA and alternative stack for tunnelling through a tunnelling server at the same time, so that packets sent through tunnelling servers or the HA can reach the applications.

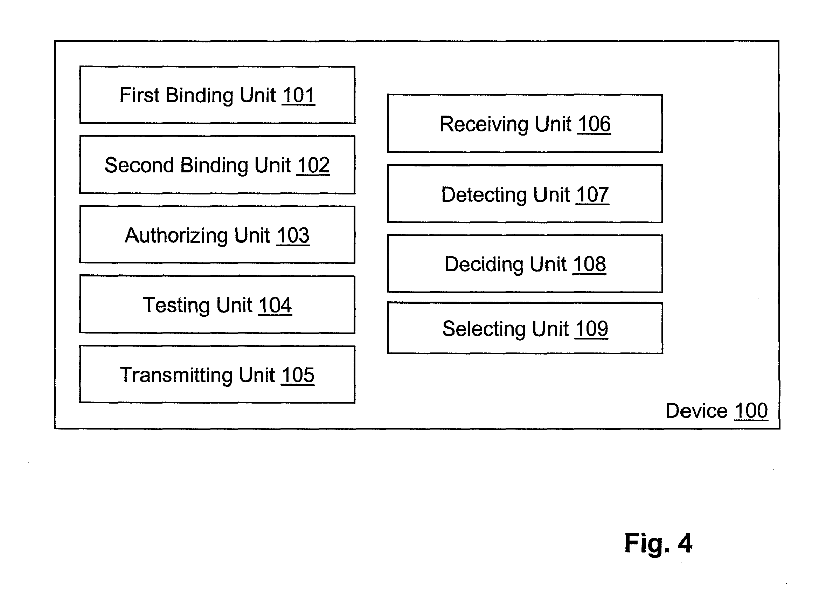

In the following an embodiment of the invention will be described with reference to Fig. 4.

As shown in Fig. 4, a device 100 comprises a first binding unit 101, a second binding unit 102 and an authorizing unit 103. The device 100 may further comprise a testing unit 104, a transmitting unit 105, a receiving unit 106, a detecting unit 107, and deciding unit 108 and a selecting unit 109.

The first binding unit 101 provides for a binding to a first tunnelling server using a first protocol. The first tunnelling server may be a home agent of the device 100 and the first protocol may support services of a communication network environment different from a current communication network environment in which the device 100 is present currently. The first protocol may comprise DSMIPv6 stack.

The second binding unit 102 provides for a binding to a second tunnelling server using a second protocol different from the first protocol. The second protocol may comprise a tunnelling protocol such as, for example, 6to4, Teredo, Anything in Anything or SSH.

The authorizing unit 103 causes the first binding unit 101 or the second binding unit 102 to provide the binding.

The testing unit 104 may test the first and second tunnelling servers. In this case, the authorizing unit 103 may cause the first binding unit 101 or the second binding unit 102 to provide the binding based on a result of the testing.

The testing unit 104 may comprise the transmitting unit 105, the receiving unit 106, the detecting unit 107 and the deciding unit 108. The transmitting unit 105 may transmit a first message towards a correspondent node through the first tunnelling server and a second message towards the correspondent node through the second tunnelling server. The receiving unit 106 may receive a first response message from the first tunnelling server based on the first message and a second response message from the second tunnelling server based on the second message. The detecting unit 107 may detect a time of arrival of each of the first and second response messages and determine round-trip times, and the deciding unit 108 may to decide congestion status of the first and second tunnelling servers based on the round-trip times of each of the first and second response messages.

The selection unit 109 may select at least one of the first and second tunnelling servers out of a plurality of tunnelling servers indicated to the device 100. The plurality of tunnelling servers may be indicated to the device 100 for example by a connection broker, or may be pre-configured in the device 100 e.g. in a storage unit (not shown).

The device 100 may receive collected information on tunnelling servers having a first interface to the communication network environment providing services and a second interface to the current communication network environment in which the device 100 is present currently, or the collected information may have been pre-configured in the device 100. Then, at least one of the first and second tunnelling servers may be selected by the selecting unit 109 out of the plurality of tunnelling servers indicated by the collected information.

The collected information may include information on a tunnelling server actually used by the device 100.

Moreover, the device 100 may receive a message e.g. from a connection broker, forcing a release of the providing for the first and second bindings, and the authorizing unit 103 may cause the first binding unit 101 or the second binding unit 102 to provide the binding in response to the message.

In addition, the device 100 may receive a message, e.g. from a connection broker, forcing the testing of the first and second tunnelling servers by the testing unit 104 which may then perform the testing in response to the message.

For example, this message may be received when one of the first and second tunnelling servers is overloaded.

It is to be noted that the device 100 shown in Fig. 4 may have further functionality for working e.g. as mobile node. Here the functions of the device 100 relevant for understanding the principles of the invention are described using functional blocks as shown in Fig. 4. The arrangement of the functional blocks of the device is not construed to limit the invention, and the functions may be performed by one block or further split into sub-blocks.

The present invention may also be implemented as a storage medium storing computer program instructions readable by a processing unit, and a signal carrying processor implementable instructions for controlling a processing unit.

It is to be understood that the above description is illustrative of the invention and is not to be construed as limiting the invention. Various modifications and applications may occur to those skilled in the art without departing from the true spirit and scope of the invention as defined by the appended claims.

## Claims

1. A device comprising:
a first binding unit configured to provide for a binding to a first tunnelling server using a first protocol;
a second binding unit configured to provide for a binding to a second tunnelling server using a second protocol different from the first protocol; and
an authorizing unit configured to cause the first or second binding unit to provide the binding.

2. The device of claim 1, comprising:
a testing unit configured to test the first and second tunnelling servers,
wherein the authorizing unit is configured to cause the first or second binding unit to provide the binding based on a result of the testing.

3. The device of claim 2, the testing unit comprising:
a transmitting unit configured to transmit a first message towards a correspondent node through the first tunnelling server and a second message towards the correspondent node through the second tunnelling server;
a receiving unit configured to receive a first response message from the first tunnelling server based on the first message and a second response message from the second tunnelling server based on the second message;
a detecting unit configured to detect a time of arrival of each of the first and second response messages and determine round-trip times; and
a deciding unit configured to decide congestion status of the first and second tunnelling servers based on the round-trip times of each of the first and second response messages.

4. The device of claim 1, comprising:
a selection unit configured to select at least one of the first and second tunnelling servers out of a plurality of tunnelling servers indicated to the device.

5. The device of claim 1, wherein the first tunnelling server is a home agent of the device and the first protocol supports services of a communication network environment different from a current communication network environment in which the device is present currently, and the second protocol comprises a tunnelling protocol.

6. A method comprising:
providing for a first binding to a first tunnelling server using a first protocol;
providing for a second binding to a second tunnelling server using a second protocol different from the first protocol; and
causing the first or second binding.

7. The method of claim 6, comprising:
testing the first and second tunnelling servers,
wherein the first or second binding is caused based on a result of the testing.

8. The method of claim 7, wherein the testing comprises:
transmitting a first message towards a correspondent node through the first tunnelling server and a second message towards the correspondent node through the second tunnelling server;
receiving a first response message from the first tunnelling server based on the first message and a second response message from the second tunnelling server based on the second message;
detecting a time of arrival of each of the first and second response messages and determining round-trip times; and
deciding congestion status of the first and second tunnelling servers based on the round-trip times of each of the first and second response messages.

9. The method of claim 6, comprising:
receiving collected information on tunnelling servers having a first interface to a communication network environment providing services and a second interface to a current communication network environment in which a mobile node is present currently; and
selecting at least one of the first and second tunnelling servers out of a plurality of tunnelling servers indicated by the collected information.

10. The method of claim 9, wherein the collected information includes information on a tunnelling server actually used by the mobile node.

11. The method of claim 6, comprising:
receiving a message forcing a release of the providing for the first and second bindings; and
causing the first or second binding in response to the message.

12. The method of claim 6, comprising:
receiving a message forcing the testing of the first and second tunnelling servers; and
performing the testing in response to the message.

13. The method of claim 12, wherein the message is received when one of the first and second tunnelling servers is overloaded.

14. A storage medium storing computer program instructions readable by a processing unit for performing:
providing for a first binding to a first tunnelling server using a first protocol;
providing for a second binding to a second tunnelling server using a second protocol different from the first protocol; and
causing the first or second binding.

15. A signal carrying processor implementable instructions for controlling a processing unit to carry out:
providing for a first binding to a first tunnelling server using a first protocol;
providing for a second binding to a second tunnelling server using a second protocol different from the first protocol; and
causing the first or second binding.

16. A device comprising:
first binding means for providing for a binding to a first tunnelling server using a first protocol;
second binding means for providing for a binding to a second tunnelling server using a second protocol different from the first protocol; and
authorizing means for causing the first or second binding means to provide the binding.
